# EUROPÄISCHE PATENTSCHRIFT

(11) **EP 2 195 683 B1**
(45) Veröffentlichungstag und Bekanntmachung des Hinweises auf die Patenterteilung: **13.04.2016**
(21) Anmeldenummer: 08786378.3
(22) Anmeldetag: 24.07.2008
(51) Int. Cl.: G01S 7/524, G01S 7/526, G01S 13/93, G01S 13/87, G01S 15/87, G01S 15/93

(54) **FAHRERASSISTENZSYSTEM UND -VERFAHREN ZU SEINEM BETRIEB**
DRIVER ASSISTANCE SYSTEM AND METHOD FOR THE OPERATION THEREOF
SYSTÈME D'ASSISTANCE À LA CONDUITE ET SON PROCÉDÉ DE FONCTIONNEMENT

(30) Priorität: 24.09.2007 DE 102007045561
(43) Veröffentlichungstag der Anmeldung: 16.06.2010
(73) Patentinhaber: Robert Bosch GmbH, 70442 Stuttgart (DE)
(72) Erfinder: ECKEL, Matthias, 71706 Markgroeningen (DE); HOETZEL, Juergen, 61197 Florstadt (DE)
(86) Internationale Anmeldenummer: PCT/EP2008/059686
(87) Internationale Veröffentlichungsnummer: WO 2009/040155

(56) Entgegenhaltungen:
- FR-A- 2 874 278
- US-A- 5 229 975
- US-A1- 2004 189 452

## Beschreibung

Die vorliegende Erfindung liegt auf dem Gebiet der Fahrassistenzsysteme für Kraftfahrzeuge, genauer auf dem Gebiet der Systeme zur Umfelderfassung für Fahrzeuge, die beispielsweise für Abstandswarner, Parklückendetektoren und Einparkhilfen eingesetzt werden.

Bei derartigen Erfassungssystemen werden beispielsweise Ultraschall- oder Mikrowellensensoren zur Aussendung von nicht leitungsgebundenen Signalen und zur Erfassung von Echosignalen eingesetzt, die von Gegenständen in der Umgebung des Fahrzeugs reflektiert werden.

Über die Ermittlung von Laufzeiten der Signale kann mit Hilfe unterschiedlicher Verfahren individuell eine Abstandsbestimmung zwischen den reflektierenden Gegenständen und den Sensoren durchgeführt werden.

Bei vielen modernen Systemen der beschriebenen Art wird eine Mehrzahl von Sensoren zur Verbesserung des Erfassungsbereiches und der Erfassungsauflösung mit dem Ziel eingesetzt, die Fahrzeugumgebung in allen relevanten Richtungen zu erfassen.

Entsprechende Systeme sind aus dem Stand der Technik bereits in verschiedenen Abwandlungen bekannt.

Aus der DE 102005033403 A1 ist allgemein ein Verfahren zur Messung von Entfernungen bekannt, beispielsweise mittels Radar, Lidar oder akustischen Wellen, bei dem eine Signallaufzeit gemessen und ausgewertet wird. Um die Laufzeit genau zu bestimmen, wird das reflektierte und erfasste Signal über eine Korrelationsanalyse mit einem dem ausgesandten Signal zugeordneten Referenzsignal unter Verwendung eines "Matched filters" verglichen.

Aus der DE 19744185 A1 ist für ein Kraftfahrzeug eine Ultraschallabstandsmessung bekannt, bei der mehrere Ultraschallwandler eingesetzt werden. Die gleichzeitige Aussendung von Ultraschallimpulsen wird durch Ausnutzung der Überlagerung und Addition von entsprechenden Wellenamplituden verwendet, um höhere Sendestärken und damit größere Reichweiten zu erzielen.

Aus der GB 2352294 A ist ein Ultraschallabstandsmesssystem für Kraftfahrzeuge bekannt, bei dem Wandler nacheinander bei unterschiedlichen Frequenzen betrieben werden, um Interferenzen beziehungsweise Auslöschungen, die bei bestimmten Frequenzen zufällig auftreten können, durch den Betrieb bei anderen Frequenzen korrigieren zu können.

Aus der DE 19963755 A1 ist eine Einrichtung zur Abstandsmessung für ein Kraftfahrzeug bekannt, bei der mehrere Abstandssensoren vorgesehen sind, die in verschiedenen Arbeitsmodi betrieben werden können, um die Qualität der Messung zu verbessern.

Aus der EP 0613428 B1 ist ein Bussystem insbesondere in einem Kraftfahrzeug bekannt, das einen mehrere Steuergeräte miteinander verbindenden Bus aufweist und bei dem auf dem Bus übertragene Daten in einer zentralen Einrichtung ausgewertet werden. Nachrichten werden mit geringer Sendewiederholfrequenz über den Bus ausgegeben und von den einzelnen Steuergeräten bei Bedarf entnommen.

Aus der US 6088810 A1 ist eine Einrichtung für eine synchronisierte Datenübertragung zwischen örtlich voneinander abgesetzten Messgeräten beziehungsweise Sensoren oder zwischen diesen und einer Datenverarbeitungseinrichtung bekannt. Die Einrichtung umfasst einen seriellen Bus, über den die Komponenten der Einrichtung in zwei unterschiedlichen Betriebsarten kommunizieren.

Aus der US 4736367 A1 ist eine Einrichtung für die Steuerung und Überwachung einer Vielzahl von Relaisschaltungen bekannt, die über ein Eindrahtbussystem mit der Einrichtung verbunden sind.

Aus der DE 102006021378 A1 ist ein Rückfahrsensor für ein Kraftfahrzeug bekannt, bei dem die Funktion eines Steuergerätes für mehrere Sensoren von einem Mastersensor übernommen wird. Dieser weist, wie auch entsprechende, ihm zugeordnete Slave-Sensoren einen Mikroprozessor sowie einen Wandler zum Senden und Empfangen von Ultraschallsignalen auf. Der Mastersensor steuert das Timing für den Betrieb der Slave-Sensoren und die Erfassung der Ergebnisse.

Die vorliegende Erfindung bezieht sich auf ein Fahrassistenzsystem zur Erfassung der Umgebung eines Kraftfahrzeuges mit wenigstens zwei Sensoren zur Aussendung von nicht leitungsgebundenen Signalen und zur Erfassung von gegebenenfalls reflektierten Echosignalen mit wenigstens einer Auswerteeinheit zur Bestimmung einer Laufzeit eines Signals und mit einer Ausgabeeinheit zur Übermittlung des Ergebnisses der Umgebungserfassung an den Fahrer.

Die vorliegende Erfindung gestaltet ein Fahrassistenzsystem der eingangs genannten Art funktionssicher und dabei derart vereinfacht, dass die Herstellung und Montage des Systems möglichst kostengünstig und wenig fehleranfällig wird.

Der Erfindung liegt dabei der Gedanke zugrunde, dass durch eine baugleiche Gestaltung aller Sensoren die Produktionskosten verringert und insbesondere der Aufwand bei der Montage des Systems gering gehalten werden kann. Es muss beim Zusammenbau nicht zwischen verschiedenen Sensoren unterschieden werden, denen bestimmte Einbauorte am Fahrzeug zugeordnet sind. Zudem ist vorgesehen, dass die Sensoren ihre entsprechenden individuellen Erfassungsergebnisse untereinander abstimmen und vergleichen und das entsprechende Gesamtergebnis an eine Ausgabeeinheit übermitteln, die an das Bussystem angeschlossen ist und die nur für die Erkennbarkeit des Erfassungsergebnisses für einen Fahrer sorgt. Dazu kann die Ausgabeeinheit eine optische oder akustische oder eine kombinierte optisch/ akustische Anzeige beispielsweise in Form eines Bildschirms, einer oder mehrerer Signalleuchten oder eines akustischen Signalgebers enthalten. Eine zentrale Steuereinheit zur Zusammenführung der Erfassungsergebnisse der einzelnen Sensoren kann gemäß der Erfindung entfallen.

Die einzelnen Sensoren können gegebenenfalls untereinander die Reihenfolge und das zeitliche Schema, in dem sie ihre Messungen durchführen, das heißt entsprechende Signale aussenden, koordinieren oder, wenn die Signale einander nicht stören, können die Sensoren die Messungen auch unsynchronisiert zueinander durchführen. Im Ergebnis hält jeder der Sensoren zu bestimmten Zeiten aktuelle Erfassungsergebnisse bereit, die entweder in der Form von Laufzeitangaben, einer daraus ermittelten Objektentfernung oder aus der Information bestehen, dass kein reflektiertes Signal erfasst wurde.

Hierzu wartet jeder Sensor nach der Aussendung eines Signals für eine bestimmte Messzeit auf Ergebnisse, wobei die Messzeit auf die zu überwachende Entfernung vom Kraftfahrzeug beziehungsweise vom jeweiligen Sensor, auf die Sensortechnologie und auf das Sensormessverfähren abgestimmt ist. Bei einem Erfassungsbereich von fünf Metern und der Verwendung von Ultraschallsignalen mit einem Puls-Echo-Messverfahren kann beispielsweise ein Messzeit von 30 Millisekunden gewählt werden. Trifft in der genannten Zeit kein reflektiertes Signal ein, so zieht der einzelne Sensor in seiner Auswerteeinheit daraus den Schluss, dass sich kein Objekt in dem von ihm überwachten Raum befindet.

Die individuell ermittelten Erfassungsergebnisse der Sensoren werden von jedem Sensor jeweils wenigstens einem weiteren Sensor übermittelt, wobei dazu ein entsprechendes Sendeprotokoll auf dem Bussystem verwendet werden kann, das von jedem Sensor die Integration der von ihm ermittelten Erfassungswerte in ein Datentelegramm verlangt, wobei die bereits früher übermittelten Erfassungsergebnisse anderer Sensoren ebenfalls in dem Datentelegramm mit wiederholt werden. Auf diese Weise wird das Datentelegramm nach jeder Wiederholung durch einen weiteren Sensor durch ein weiteres Erfassungsergebnis angereichert, so dass nach einem von der Anzahl der Sensoren abhängigen Systemzyklus das Datentelegramm alle Erfassungsergebnisse aller Sensoren enthält.

Zu diesem Zeitpunkt kann die Ausgabeeinheit diese Erfassungsergebnisse oder Teile davon (z.B. nächster gemessener Abstand) dem Fahrer anzeigen.

Im nächsten Systemzyklus kann dann ein neues Erfassungsintervall gestartet werden.

Jede Auswerteeinheit ein Umrechnungsmodul zur Ermittlung eines Objektabstandes aus der Signallaufzeit aufweist.

Die Auswerteeinheiten können zusätzlich auch jeweils ein Vergleichsmodul zum Vergleich des in dem jeweiligen Sensor ermittelten Objektabstandes oder der Signallaufzeit mit den durch andere Sensoren ermittelten Werten aufweisen.

Alternativ oder zusätzlich dazu kann jede Auswerteeinheit ein Grenzwertvergleichsmodul zum Vergleich des in dem jeweiligen Sensor ermittelten Objektabstandes mit einem dem jeweiligen Sensor zugeordneten Grenzwert aufweisen.

Das erfindungsgemäße System erlaubt, dass bei der Übermittlung der Erfassungswerte zwischen den Sensoren jeder Sensor für sich sein Erfassungsergebnis mit den Werten der übrigen Sensoren vergleicht und entscheidet, wie der von ihm gelieferte Erfassungswert im Verhältnis zu den übrigen Erfassungswerten zu bewerten ist.

Beispielsweise kann vorgesehen sein, dass jeder Sensor für sich bewertet, ob der von ihm ermittelte Objektabstand geringer ist als alle übrigen Objektabstände und in diesem Fall kann der jeweilige Sensor sein Erfassungsergebnis in dem Datentelegramm auf dem Bussystem entsprechend kennzeichnen. Ein eventuell nachfolgender Sensor vergleicht seine Erfassungsergebnisse dann entweder mit allen vorangehend ermittelten Ergebnissen oder nur mit dem entsprechend als minimal gekennzeichneten Objektabstand und ändert gegebenenfalls das Datentelegramm entsprechend.

Nachdem alle Sensoren ihre Erfassungsergebnisse beigetragen und bewertet haben, entsteht somit ein Datentelegramm auf dem Bussystem, das alle relevanten Informationen über die Objektabstände enthält, die von den einzelnen Sensoren ermittelt worden sind sowie über den minimalen ermittelten Objektabstand.

Zudem kann jedem der Sensoren ein Grenzwert zugeordnet sein, der einen kritischen Objektabstand bezeichnet. Wird ein Objektabstand ermittelt, der unterhalb des Grenzwertes liegt, so wird das Erfassungsergebnis entsprechend gekennzeichnet und eine diesbezügliche Information in das Datentelegramm mit aufgenommen. Auf diese Weise entsteht durch Wiederholung und Vervollständigung des Datentelegramms durch alle Sensoren ein Gesamttelegramm, das auch die Information enthält, welche der Sensoren entsprechend kritische Objektabstände ermittelt haben.

Im Ergebnis wird ohne die Intervention einer Steuereinheit, allein durch das Zusammenwirken der Sensoren, ein Datentelegramm geschaffen, das ohne eine weitere Bewertung der Erfassungsergebnisse einer Ausgabeeinheit zugeführt werden kann. Diese kann beispielsweise für jeden Sensor einzeln einen Anzeigebalken generieren, der die entsprechenden Objektentfernungen widerspiegelt und auch das Unterschreiten einer kritischen Objektentfernung kennzeichnet. Entsprechend kann, sobald bei wenigstens einem Sensor ein Unterschreiten des kritischen Objektabstandes vorliegt, ein Warnsignal in akustischer und/oder optischer Form abgegeben werden.

Vorteilhaft weist jeder der Sensoren einen Mikroprozessor, einen Baustein zur Ansteuerung und zum Auslesen eines Wandlers und einen Bustreiberbaustein auf.

Diese Elemente dienen der Ermittlung von entsprechenden Messergebnissen sowie der Vorverarbeitung, der Erfassung des bisher auf dem Bussystem vorhandenen Datentelegramms, der Integration der eigenen Erfassungsergebnisse in das Datentelegramm und der Übermittlung an das Bussystem.

Der Baustein zur Ansteuerung und zum Auslesen des Wandlers kann beispielsweise als anwenderspezifisch integrierter Schaltkreis (ASIC) ausgebildet sein, wobei in den ASIC auch ein Mikroprozessor und gegebenenfalls auch ein Datenspeicher in Form eines EPROMS integriert sein kann. Der Bustreiberbaustein kann separat als integrierter Schaltkreis vorliegen, jedoch auch ebenfalls in den ASIC integriert sein.

Es ist auch denkbar, die genannten Elemente bis auf die Datenspeichereinheit in jeden Sensor zu integrieren, jedoch die Sensoren mit einer zentralen Datenspeichereinheit in Form eines EPROMS über das Bussystem zu verbinden. Die jeweilige Datenspeichereinheit, dezentral oder zentral aufgebaut, enthält üblicherweise auch Software zum Betrieb des Mikroprozessors sowie entsprechende Parameter, wobei sowohl die Software in Summe als auch die Parameter für jeden Sensor unterschiedlich sein können. Wichtig ist indes, dass der Hardwareaufbau und die Basissoftware zur Nachladung anderer Software jedes Sensors identisch ist.

Die Datenspeichereinheit kann beispielsweise zentral auch in ein Datenverarbeitungssystem des Kraftfahrzeugs integriert sein, das andere Funktionen erfüllt als das Fahrassistenzsystem.

Derartige Datenverarbeitungssysteme liegen in einer Vielzahl in einem Fahrzeug vor, beispielsweise in der Motorsteuerung, beim Navigationsgerät oder in anderen Multimediaeinheiten des Fahrzeugs wie beispielsweise einem Autoradio oder einem Klangsteuerungsprozessor. Da all diese Einheiten Datenspeicher aufweisen, kann eine derartige Datenspeichereinheit zusätzlich für die Sensoren des Fahrassistenzsystems genutzt werden.

Bei einem Fahrassistenzsystems gemäß der Erfindung kann eine Vielzahl von Sensoren, insbesondere wenigsten vier oder sogar wenigstens zehn Sensoren, vorgesehen sein. Das System ist in dem Sinne skalierbar, dass an den einzelnen Sensoren keine Bauveränderungen vorgenommen werden müssen, wenn sie für ein System mit mehr oder weniger Sensoren verwendet werden. Die Betriebssoftware ist individuell anpassungsfähig, so dass eine bestimmte, im konkreten Fall vorliegende Anzahl von Sensoren betrieben werden kann. Auch die Ausgabeeinheit kann an eine bestimmte Anzahl von Sensoren anpassbar sein.

Die Erfindung bezieht sich außer auf ein Fahrassistenzsystem der oben beschriebenen Art auch auf ein Verfahren zum Betrieb eines Fahrassistenzsystems mit wenigstens zwei Sensoren zur Aussendung von nicht leitungsgebundenen Signalen und zur Erfassung von gegebenenfalls reflektierten Echosignalen, wobei alle Sensoren baugleich sind und jeder Sensor einen Wandler sowie eine Auswerteeinheit zur Bestimmung einer Signallaufzeit aufweist und die Sensoren mittels eines Bussystems untereinander verbunden sind und wobei das Bussystem durch eine Busleitung gebildet ist, in der die Sensoren in Form einer linearen Kette miteinander verbunden sind und jeder der Sensoren die Busleitung zu dem ihm nachfolgenden Sensor mittels eines Schalters öffnen und schließen kann mit folgenden Schritten:
zunächst sind alle Schalter geöffnet,
jeder Sensor überprüft, ob er an die Busleitung angeschlossen ist,
ist ein Sensor an die Busleitung angeschlossen, so wertet er ein auf der Busleitung gegebenenfalls gesendetes Signal aus, das die Zahl der bereits registrierten Sensoren enthält,
der Sensor registriert sich unter der nächst höheren Registriernummer, schließt die Busleitung zu dem ihm folgenden benachbarten Sensor und
der Sensor übermittelt auf der Busleitung die Anzahl der bereits registrierten Sensoren.

Zum Beginn des Betriebes des erfindungsgemäßen Fahrassistenzsystems befindet sich jeder der Sensoren in demselben Anfangszustand. Der erste Sensor, der direkt mit der Busleitung verbunden ist, empfängt dabei das auf der Busleitung vorhandene Signal, das beispielsweise durch ein festes oder veränderliches Spannungssignal, im einfachsten Fall, eine an der Busleitung anliegende Spannung gegeben ist. Da die Schalter der einzelnen Sensoren geöffnet sind, empfangen die übrigen Sensoren dieses Signal nicht.

Der erste Sensor schließt daraus, dass ihm keine Signale anderer Sensoren übermittelt werden, dass er der erste Sensor bei der Initialisierung ist und gibt sich die Registrierungsnummer 1.

Mit vorgegebener physikalischer Systemtopologie ist damit auch seine Position an dem Fahrzeug bereits festgelegt. Nach der Initialisierung schließt er den Schalter und stellt damit die Verbindung zu dem nächsten benachbarten Sensor her. Dieser registriert damit ein Signal auf der Busleitung. Von dem ersten Sensor wird dem zweiten Sensor zudem die Information übermittelt, dass der erste Sensor bereits registriert ist. Hieraus schließt der zweite Sensor aufgrund des allen Sensoren gemeinsamen Initialisierungsprogramms, dass er nur der zweite Sensor sein kann, registriert sich als zweiter Sensor und schaltet den Schalter ein, der ihn mit dem nächsten benachbarten Sensor, dem potentiellen dritten Sensor, verbindet. Auf diese Weise schreitet der Initialisierungsprozess soweit fort, bis alle Sensoren initialisiert und unter ihrer jeweiligen Nummer registriert sind. Spätestens zu diesem Zeitpunkt liegt die Information über die Anzahl der Sensoren und damit auch über eine Konfiguration des Systems vor. Beispielsweise kann von der Anzahl der vorhandenen Sensoren auch ihre Verteilung an dem Kraftfahrzeug abgeleitet werden. Es kann zum Beispiel vorgesehen sein, dass bei einer Konfiguration des Systems mit acht Sensoren vier von diesen an der vorderen Stoßstange, beginnend mit Sensor Nr. 1 vorne links bis Sensor Nr. 4 vorne rechts und vier von den Sensoren an der hinteren Stoßstange, beginnend mit Sensor Nr. 5 hinten rechts und endet mit Sensor Nr. 8 hinten links, vorgesehen sind.

Bei einem System mit zehn Sensoren würde die Software aufgrund der vorgegebenen Einstellungen (Modell der Systemtopologie für 10 Sensorsysteme) beispielsweise erkennen, dass in diesem Fall vier Sensoren an der vorderen Stoßstange, Nr. 5 auf der rechten Fahrzeugseite, die Nr. 6 bis 9 an der hinteren Stoßstange und Nr. 10 auf der linken Fahrzeugseite vorgesehen sind. Diese Information ist in der allen Sensoren gemeinsamen Software oder in der durch alle Sensoren zugänglichen zentral gespeicherten Software bereits hinterlegt. Zudem können zu den einzelnen Sensorpositionen auch individuelle Grenzwerte für kritische Objektentfernungen hinterlegt sein, so dass nach der Initialisierung jeder Sensor die Information über die ihm zugeordnete kritische Objektentfernung in Form eines Grenzwertes verfügbar hat.

Sobald die Zahl der Sensoren festliegt, steht auch für den Messbetrieb fest, wie viele Erfassungsergebnisse jeweils für einen Durchlauf in dem Datenprotokoll auf dem Bussystem gesammelt werden müssen bis dass der nächste Systemzyklus gestartet wird.

Die Erfindung bezieht sich zudem auch auf ein Verfahren zum Betrieb eines Fahrassistenzsystems mit wenigstens zwei Sensoren zur Aussendung von nicht leitungsgebundenen Signalen und zur Erfassung von gegebenenfalls reflektierten Echosignalen, wobei alle Sensoren baugleich sind und jeder Sensor einen Wandler sowie eine Auswerteeinheit zur Bestimmung einer Signallaufzeit aufweist und die Sensoren mittels eines Bussystems untereinander und mit einer Ausgabeeinheit verbunden sind, wobei jeder der Sensoren eine Laufzeitmessung durchführt, gegebenenfalls eine Laufzeit ermittelt und das Erfassungsergebnis an wenigstens einen anderen Sensor weitergibt, und wobei jeder der Sensoren eine gegebenenfalls von ihm ermittelte Laufzeit durch Vergleich mit den ihm übermittelten Laufzeiten bewertet und die Bewertung ebenfalls übermittelt.

Bei dem Verfahren kann einer der Sensoren, beispielsweise Nr. 1 beginnen und ein Signal aussenden, die Reflexion erfassen und hieraus eine Laufzeit beziehungsweise Objektentfernung ermitteln. Dieser Messwert oder die Information, dass keine Reflexion erfasst wurde, können in das Datentelegramm auf dem Bussystem integriert und von dem Sensor ausgesendet werden. Hierauf kann der nächste Sensor, beispielsweise Nr. 2, eine entsprechende Messung durchführen und seine Erfassungsergebnisse zusätzlich in das Datentelegramm integrieren.

Zudem kann der zweite Sensor seine Erfassungsergebnisse in Bezug auf die Ergebnisse des ersten Sensors bewerten und beispielsweise kennzeichnen, wenn die von ihm erfasste Objektentfernung geringer ist als die von dem ersten Sensor erfasste Objektentfernung.

Dieser Vorgang wird danach durch die übrigen Sensoren wiederholt, so dass am Ende des Systemmesszyklus neben den erfassten Objektentfernungen beziehungsweise Fehlanzeigen auch die geringste Objektentfernung beziehungsweise die Nr. des Sensors, der diese ermittelt hat, feststeht. Diese Größen können ohne eine weitere Verarbeitung an die Ausgabeeinheit übermittelt beziehungsweise durch diese vom Bussystem abgenommen und optisch und/oder akustisch angezeigt werden. Der Sensor mit der geringsten Objektentfernung kann in einer Anzeige der Ausgabeeinheit besonders gekennzeichnet werden, beispielsweise durch eine blinkende und/oder farblich hervorgehobene Anzeige.

Die Erfindung bezieht sich zudem auf ein Verfahren zum Betrieb eines Fahrassistenzsystems mit wenigstens zwei Sensoren zur Aussendung von nicht leitungsgebundenen Signalen und zur Erfassung von gegebenenfalls reflektierten Echosignalen, wobei alle Sensoren baugleich sind und jeder Sensor einen Wandler sowie eine Auswerteeinheit zur Bestimmung einer Signallaufzeit aufweist und die Sensoren mittels eines Bussystems untereinander und mit einer Ausgabeeinheit verbunden sind, wobei jeder der Sensoren eine Laufzeitmessung durchführt, gegebenenfalls eine Laufzeit ermittelt und diese mit einem ihm zugeordneten Grenzwert vergleicht und wobei der Sensor den Vergleich bewertet und die Bewertung insbesondere gemeinsam mit den ihm übermittelten Bewertungen der übrigen Sensoren an wenigstens einen weiteren Sensor übermittelt.

Es findet demnach bei jedem Sensor ein individueller Vergleich mit dem ihm zugeordneten Grenzwert statt, der beispielsweise durch eine kritische Objektentfernung gegeben ist. Wird bei einem Sensor eine tatsächliche Objektentfernung festgestellt, die geringer ist als der Grenzwert, so wird eine entsprechende Information dem Datentelegramm hinzugefügt. Auf diese Weise verfügt die Ausgabeeinheit am Ende des Zyklus über eine Aufzählung derjenigen Sensoren, die eine Unterschreitung ihrer individuellen Grenzwerte angezeigt haben. Diese Information kann ohne weitere Vorverarbeitung angezeigt werden, so dass dem Fahrer ein Überblick gegeben werden kann, welche Sensoren entsprechende kritische Werte übermittelt haben.

Die Synchronisation der einzelnen Erfassungsvorgänge der Sensoren kann ohne ein Steuergerät allein dadurch erfolgen, dass in einem Zyklus grundsätzlich einer der Sensoren, beispielsweise Nr. 1, beginnt und eine Messung durchführt. Darauf kann der Sensor das Datentelegramm mit seinen Erfassungsergebnissen auf das Bussystem legen, worauf der nächste Sensor der Reihenfolge, beispielsweise Nr. 2, synchronisiert mit dem Auflegen des Datentelegramms auf den Bus seine Messung durchführt und so weiter bis zum Ende des Zyklus. Da jeder Sensor das Auflegen eines Datentelegramms auf den Bus verfolgt, kann die Synchronisierung mit jedem Auflegen stattfinden. Dabei ist durch die Initialisierung bekannt, wie viele Sensoren in dem System vorhanden sind, so dass nach Auffüllen des Datentelegramms die Ausgabeeinheit zugreifen und die Daten anzeigen kann und der nächste Erfassungszyklus gestartet wird.

Die Initialisierung der Sensoren geschieht grundsätzlich beim "Power up" selbsttätig, das heißt ohne dass der Vorgang manuell gestartet werden muß. Gleiches gilt für das Wieder in Bertieb Nehmen des Systems nach einer Reparatur oder dem Ersetzen eines Sensors.

Im folgenden wird die Erfindung anhand eines Ausführungsbeispiels in einer Zeichnung gezeigt und anschließend beschrieben.

Dabei zeigen:
- Fig. 1: eine schematische Ansicht eines Fahrzeugs von oben mit zehn verteilten Sensoren;
- Fig. 2: das Zusammenwirken mit der Ausgabeeinheit;
- Fig. 3: den Aufbau eines Sensors;
- Fig. 4: eine detaillierte Darstellung der Busleitung und
- Fig. 5: eine beispielhafte Darstellung eines Datentelegramms.

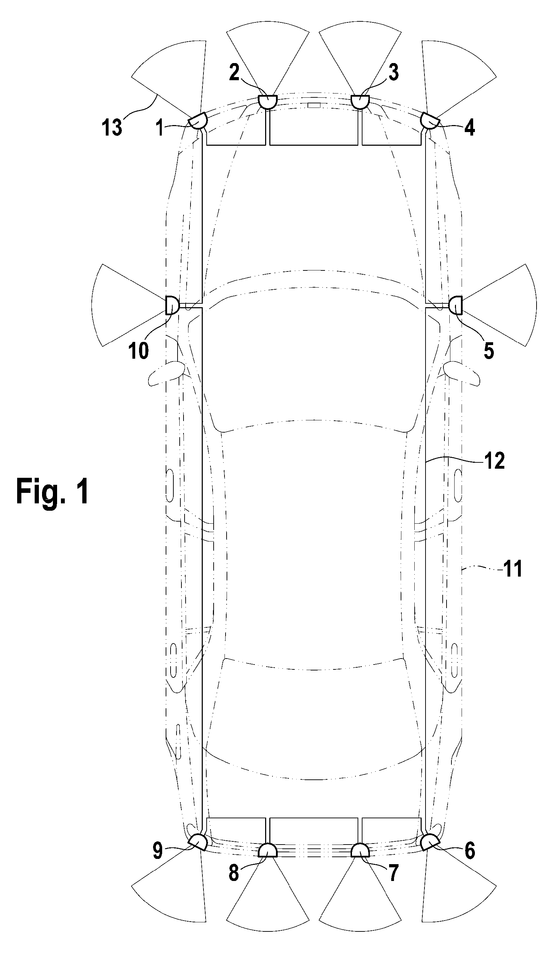

Die Figur 1 zeigt in einer Übersicht eine Kontur eines Fahrzeugs 11 mit Sensoren 1, 2, 3, 4, 5, 6, 7, 8, 9, 10 in Form von Ultraschallwandlern. Die ersten vier Sensoren 1, 2, 3, 4 sind am vorderen Ende des Fahrzeugs verteilt, der Sensor 5 an der rechten Seite, der Sensor 10 an der linken Seite des Fahrzeugs und die Sensoren 6, 7, 8, 9 am hinteren Ende an der Stoßstange des Fahrzeugs.

Die Sensoren 1 bis 10 sind mittels einer Busleitung 12 miteinander verbunden, wobei die Busleitung jeweils durch die Sensoren hindurch geleitet wird und innerhalb jedes Sensors unterbrochen werden kann.

In der Figur ist jedem der Sensoren 1 bis 10 ein Sende- und Erfassungskegel 13 zugeordnet, der die Ausrichtung des jeweiligen Sensors darstellt. Die Kegel können einander überschneiden, sie können jedoch auch so bemessen sein, dass die Erfassungsbereiche der Sensoren disjunkt sind.

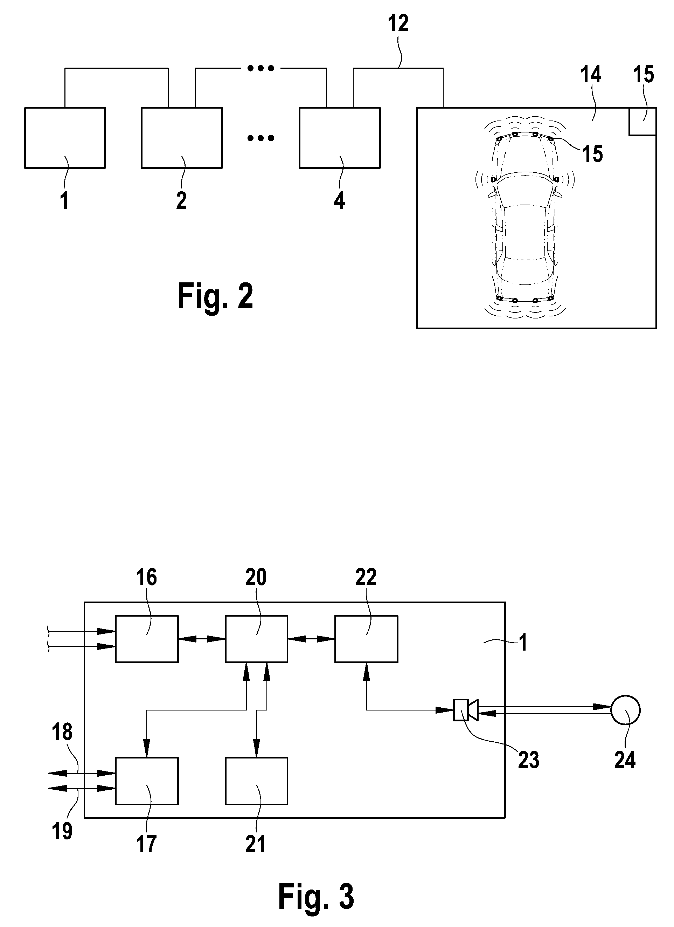

In der Figur 2 ist zusätzlich zu einer Anzahl von Sensoren 1, 2, 4 und der Busleitung 12 eine an diese angeschlossene Ausgabeeinheit 14 dargestellt, die einen Bildschirm aufweist, in dem in einer Ansicht von oben schematisch ein Fahrzeug und um dieses herum den jeweiligen Sensoren zugeordnete Erfassungsbalken dargestellt sind. Anhand der im Beispiel dreiteiligen Erfassungsbalken kann dargestellt werden, ob der von dem jeweiligen Sensor erfasste Raum hindernisfrei ist und wenn ein Hindernis nachgewiesen worden ist, zeigt die Darstellung die Entfernung des Hindernisses vom jeweiligen Sensor an.

Zudem ist jedem Sensor eine optische Warnanzeige 15 zugeordnet, die beispielsweise das Unterschreiten des jeweiligen individuellen Grenzwertes anzeigt.

Außerdem ist die Anzeigeeinheit mit einem akustischen Signalgeber 15 versehen, der bei Unterschreiten des Grenzbereichs einer der Sensoren dem Fahrer einen Signalton übermitteln kann.

Die Figur 3 zeigt beispielhaft den Aufbau eines einzelnen Sensors 1, der für sich gekapselt und gegen widrige Umgebungsbedingungen geschützt im Außenbereich des Kraftfahrzeugs angeordnet sein kann und der beispielsweise eine Leiterplatine mit verschiedenen elektronischen Bauteilen in Form von integrierten Schaltkreisen oder auch nur einzelnen integrierten Schaltkreis enthalten kann.

In dem dargestellten Beispiel ist in dem Sensor ein Spannungsregler 16 vorgesehen, der mit der Batterie des Fahrzeugs oder einer anderen Spannungsversorgung einerseits und Massepotential andererseits verbunden ist und der für eine konstante Spannungsversorgung der Schaltkreise sorgt. Zudem ist ein Bustreibermodul 17 vorgesehen, das mit einem ersten Anschluss 18 und einem zweiten Anschluss 19 mit dem Bus verbunden ist und bei dem intern ein Schalter zur Unterbrechung der Busleitung vorgesehen ist.

Das Bustreibermodul ist mit einem Mikroprozessor 20 verbunden, der programmierbar ist und seinerseits mit einer Datenspeichereinheit 21, beispielsweise in Form eines PROM/EPROM verbunden ist.

Dabei sei bemerkt, dass die Datenspeichereinheit auch außerhalb des Sensors zentral für alle Sensoren zugänglich angeordnet und beispielsweise mit der Busleitung verbunden sein kann.

Der Mikroprozessor 20 ist mit einem Ansteuermodul 22 verbunden, das einen Ultraschallwandler 23 antreibt und andererseits die durch den Ultraschallwandler 23 empfangenen Reflexionssignale analysiert und registriert.

Schematisch ist in der Figur mit 24 ein potentiell zu erfassender Gegenstand bezeichnet.

Die einzelnen Komponenten des Sensors wie das Modul 22 und der Mikroprozessor sowie gegebenenfalls das Bustreibermodul können in einem einzigen integrierten Schaltkreis zusammengefasst sein, der gegebenenfalls auch den Spannungswandler in integrierter Form mit enthalten kann.

In diesen Baustein kann zusätzlich auch die Datenspeichereinheit 21 integriert sein.

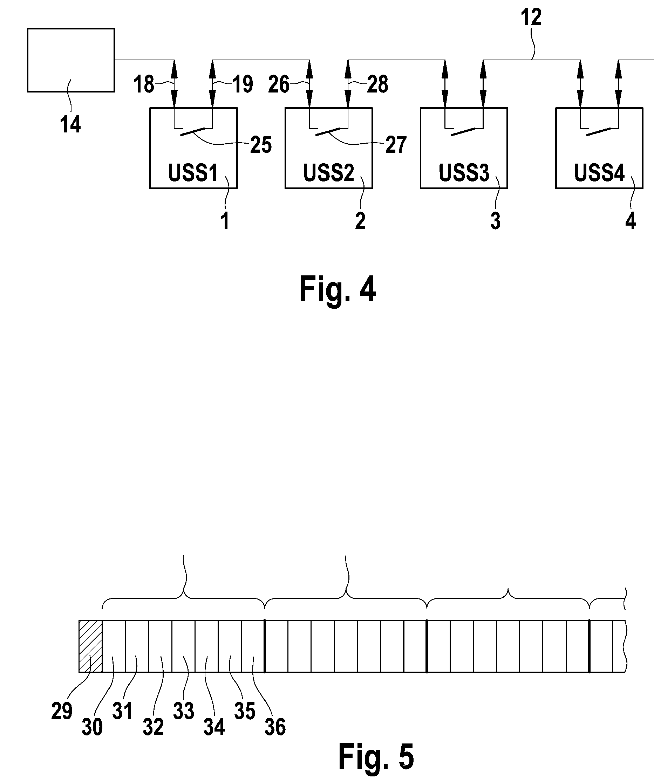

In der Figur 4 ist schematisch die Verschaltung der Busleitung 12 mit vier Sensoren 1, 2, 3, 4 und mit einer Ausgabeeinheit 14 dargestellt. Es ist gezeigt, dass der erste Sensor 1 mit seinem ersten Anschluss 18 mit der Busleitung und der Anzeige/Ausgabeeinheit 14 verbunden ist und in seinem Inneren einen Schalter 25 zur Unterbrechung der Busleitung aufweist. Dadurch, dass die Anzeigeeinheit 14 direkt mit dem Sensor 1 verbunden ist, kann eine Erweiterung des Systems ohne Veränderung der bisherigen Topologie durchgeführt werden.

Der zweite Anschluss 19 des Sensors 1 ist über eine Fortsetzung der Busleitung 12 mit dem zweiten Sensor 2 und zwar mit dessen erstem Anschluss 26 verbunden. Auch der zweite Sensor weist wie alle übrigen Sensoren einen Schalter 27 auf, der geöffnet und geschlossen werden kann und die Verbindung zwischen dem ersten Anschluss 26 und dem zweiten Anschluss 28 des zweiten Sensors 2 bewirkt. Auf diese Weise sind die vorhandenen Sensoren miteinander verbunden, und zusätzlich mit der Ausgabeeinheit 14.

In der Figur 5 ist beispielhaft ein Datentelegramm auf Basis eines 8Bit-Wortes dargestellt, wie es zur Kommunikation unter den Sensoren verwendet werden kann. Die Wortlänge kann für eine bessere Auflösung der Objektentfernung auch größer als 8 Bit sein. Die Übermittlung des Datentelegramms erfolgt in der Figur von links nach rechts gesehen mit fortschreitender Zeit und beginnt mit einem Startbit 29. Darauf folgen sieben Bits, die dem ersten Sensor zugeordnet sind, von denen das erste Sensorbit 30 anzeigt, ob der entsprechende Sensor das Datentelegramm schon mit seinen Erfassungsgrößen angereichert hat. Das zweite Sensorbit 31 zeigt an, ob der individuelle Grenzwert des entsprechenden Sensors unterschritten wurde. Das dritte Sensorbit 32 zeigt an, ob der entsprechende Sensor bis zu dem Zeitpunkt der Verfertigung des Datentelegramms einen Extremwert bei der Objektentfernungserfassung unter den Sensoren ermittelt hat und die restlichen vier Sensorbits 33, 34, 35, 36 dienen zur Codierung des tatsächlich erfassten Objektabstandes des entsprechenden Sensors.

Das Datentelegramm wird vom ersten Sensor bis zum achten Bit inklusive des Startbits aufgefüllt und an den zweiten Sensor weitergeleitet. Dieser füllt das Datenprotokoll nach der von ihm durchgeführten Messung weiter auf und reproduziert die Daten des ersten Sensors, so dass bei der Weiterleitung zum dritten Sensor bereits fünfzehn Bits aufgefüllt werden. Derart wird für die übrigen Sensoren weiterverfahren, so dass bei Vervollständigung des Datenprotokolls eine vollständige Information über die erfassten Messwerte vorliegt und an die Ausgabeeinheit 14 weitergeleitet werden kann. Diese kann ohne weitere Datenverarbeitung die entsprechenden Daten anzeigen und somit dem Fahrer einen Überblick über eventuell im Erfassungsbereich um sein Fahrzeug herum liegende Gegenstände verschaffen.

## Patentansprüche

1. Fahrassistenzsystem zur Erfassung der Umgebung eines Kraftfahrzeuges mit wenigstens zwei Sensoren (1,2,3,4,5,6,7,8,9,10) zur Aussendung von nicht leitungsgebundenen Signalen und zur Erfassung von reflektierten Echosignalen, mit wenigstens einer Auswerteeinheit (20) zur Bestimmung einer Laufzeit eines Signals und mit einer Ausgabe/Anzeigeeinheit (14) zur Übermittlung des Ergebnisses der Umgebungserfassung an den Fahrer
**dadurch gekennzeichnet,**
**dass** alle Sensoren (1,2,3,4,5,6,7,8,9,10) untereinander baugleich sind, dass jeder der Sensoren eine Auswerteeinheit (20) zur Ermittlung einer Signallaufzeit aufweist und dass die Sensoren untereinander und mit der Ausgabe/Anzeigeeinheit (14) mittels eines Bussystems (12) verbunden sind, wobei die individuell ermittelten Erfassungsergebnisse der Sensoren von jedem Sensor jeweils wenigstens einem weiteren Sensor übermittelt werden, wobei jede Auswerteeinheit (20) ein Umrechnungsmodul zur Ermittlung eines Objektabstandes aus der Signallaufzeit aufweist, wobei jede Auswerteeinheit (20) ein Vergleichsmodul zum Vergleich des in dem jeweiligen Sensor (1,2,3,4,5,6,7,8,9,10) ermittelten Objektabstandes oder der Signallaufzeit mit den durch andere Sensoren ermittelten Werten aufweist und dass die Sensoren ihre entsprechenden individuellen Erfassungsergebnisse untereinander abstimmen und vergleichen und das entsprechende Gesamtergebnis an die Ausgabeeinheit übermitteln, die an das Bussystem angeschlossen ist und die nur für die Erkennbarkeit des Erfassungsergebnisses für einen Fahrer sorgt.

2. Fahrassistenzsystem nach Anspruch 1 oder einem der folgenden,
**dadurch gekennzeichnet,**
**dass** jede Auswerteeinheit (20) ein Grenzwertvergleichsmodul zum Vergleich des in dem jeweiligen Sensor (1,2,3,4,5,6,7,8,9,10) ermittelten Objektabstandes mit einem dem jeweiligen Sensor zugeordneten Grenzwert aufweist.

3. Fahrerassistenzsystem nach Anspruch 1 oder 2, **dadurch gekennzeichnet, dass** von jedem Sensor die Integration der von ihm ermittelten Erfassungswerte in ein Datentelegramm verlangt.

4. Fahrassistenzsystem nach Anspruch 1 oder einem der folgenden,
**dadurch gekennzeichnet,**
**dass** jeder Sensor (1,2,3,4,5,6,7,8,9,10) einen Mikroprozessor (20), einen Baustein (22) zur Ansteuerung und zum Auslesen eines Wandlers (23) und einen Bustreiberbaustein (17) aufweist.

5. Fahrassistenzsystem nach Anspruch 4,
**dadurch gekennzeichnet,**
**dass** jeder Sensor (1,2,3,4,5,6,7,8,9,10) eine Datenspeichereinheit (21) aufweist.

6. Fahrassistenzsystem nach Anspruch 4,
**dadurch gekennzeichnet,**
**dass** die Sensoren (1,2,3,4,5,6,7,8,9,10) jeweils mit einer zentralen Datenspeichereinheit verbunden sind.

7. Fahrassistenzsystem nach Anspruch 6,
**dadurch gekennzeichnet,**
**dass** die zentrale Datenspeichereinheit in ein Datenverarbeitungssystem des Kraftfahrzeugs integriert ist, das andere Funktionen erfüllt als das Fahrassistenzsystem.

8. Fahrassistenzsystem nach Anspruch 1 oder einem der folgenden,
**dadurch gekennzeichnet,**
**dass** die Sensoren (1,2,3,4,5,6,7,8,9,10) Ultraschallwandler (23) aufweisen.

9. Verfahren zum Betrieb eines Fahrassistenzsystems mit wenigstens zwei Sensoren zur Aussendung von nicht leitungsgebundenen Signalen und zur Erfassung von reflektierten Echosignalen, wobei alle Sensoren (1,2,3,4,5,6,7,8,9,10) baugleich sind und jeder Sensor einen Wandler (23) sowie eine Auswerteeinheit zur Bestimmung einer Signallaufzeit aufweist und die Sensoren mittels eines Bussystems untereinander und mit einer Ausgabeeinheit (14) verbunden sind, wobei jeder der Sensoren (1,2,3,4,5,6,7,8,9,10) eine Laufzeitmessung durchführt, eine Laufzeit ermittelt und das Erfassungsergebnis an wenigstens einen anderen Sensor weitergibt, und wobei jeder der Sensoren eine von ihm ermittelte Laufzeit durch Vergleich mit den ihm übermittelten Laufzeiten bewertet und die Bewertung gemeinsam mit den ihm übermittelten Bewertungen der übrigen Sensoren an wenigstens einen weiteren Sensor übermittelt, wobei das entsprechende Gesamtergebnis an die Ausgabeeinheit übermittelt wird, die an das Bussystem angeschlossen ist und die nur für die Erkennbarkeit des Erfassungsergebnisses für einen Fahrer sorgt.

10. Verfahren zum Betrieb eines Fahrassistenzsystems nach Anspruch 9 mit wenigstens zwei Sensoren zur Aussendung von nicht leitungsgebundenen Signalen und zur Erfassung von reflektierten Echosignalen, wobei alle Sensoren (1,2,3,4,5,6,7,8,9,10) baugleich sind und jeder Sensor einen Wandler (23) sowie eine Auswerteeinheit zur Bestimmung einer Signallaufzeit aufweist und die Sensoren mittels eines Bussystems (12) untereinander und mit einer Ausgabeeinheit (14) verbunden sind, wobei jeder der Sensoren eine Laufzeitmessung durchführt, eine Laufzeit ermittelt und diese mit einem ihm zugeordneten Grenzwert vergleicht und wobei der Sensor den Vergleich bewertet und die Bewertung gemeinsam mit den ihm übermittelten Bewertungen der übrigen Sensoren an wenigstens einen weiteren Sensor übermittelt, wobei das entsprechende Gesamtergebnis an die Ausgabeeinheit übermittelt wird, die an das Bussystem angeschlossen ist und die nur für die Erkennbarkeit des Erfassungsergebnisses für einen Fahrer sorgt.

11. Verfahren zum Betrieb eines Fahrassistenzsystems mit wenigstens zwei Sensoren zur Aussendung von nicht leitungsgebundenen Signalen und zur Erfassung von gegebenenfalls reflektierten Echosignalen nach einem der Ansprüche 9 bis 10, **dadurch gekennzeichnet dass** nach einem Neustart des elektrischen Systems und/oder nach Ersetzen oder Reparatur eines der Sensoren (1,2,3,4,5,6,7,8,9,10) folgende Schritte der Initialisierung selbsttätig durchgeführt werden:
zunächst sind alle Schalter geöffnet,
jeder Sensor überprüft, ob er an die Busleitung (12) angeschlossen ist,
ist ein Sensor an die Busleitung angeschlossen, so wertet er ein auf der Busleitung gegebenenfalls gesendetes Signal aus, das die Zahl der bereits registrierten Sensoren enthält,
der Sensor registriert sich unter der nächst höheren Registriernummer, schließt die Busleitung zu dem ihm folgenden benachbarten Sensor und übermittelt auf der Busleitung die Anzahl der bereits registrierten Sensoren.

## Claims

1. Driver assistance system for sensing the surroundings of a motor vehicle with at least two sensors (1, 2, 3, 4, 5, 6, 7, 8, 9, 10) for emitting non-line-bound signals and for sensing reflected echo signals, with at least one evaluation unit (20) for determining a transit time of a signal and with an output/display unit (14) for transmitting the result of the sensing of the surroundings to the driver, **characterized**
**in that** all the sensors (1, 2, 3, 4, 5, 6, 7, 8, 9, 10) are structurally identical to one another, in that each of the sensors has an evaluation unit (20) for determining a signal transit time, and in that the sensors are connected to one another and to the output/display unit (14) by means of a bus system (12), wherein the individually determined sensing results of the sensors are each transmitted from each sensor to at least one further sensor, wherein each evaluation unit (20) has a conversion module for determining the distance from an object on the basis of the signal transit time, wherein each evaluation unit (20) has a comparison module for comparing the distance from the object or the signal transit time which is determined in the respective sensor (1, 2, 3, 4, 5, 6, 7, 8, 9, 10) with the values determined by other sensors, and in that the sensors coordinate and compare their corresponding individual sensing results with one another and transmit the corresponding overall result to the output unit which is connected to the bus system and which ensures only that the sensing result can be perceived by a driver.

2. Driver assistance system according to Claim 1 or one of the following claims,
**characterized**
**in that** each evaluation unit (20) has a limiting-value-comparison module for comparing the distance from the object determined in the respective sensor (1, 2, 3, 4, 5, 6, 7, 8, 9, 10) with a limiting value which is assigned to the respective sensor.

3. Driver assistance system according to Claim 1 or 2, **characterized in that** each sensor requests that the sensing values determined by it are integrated into a data telegram.

4. Driver assistance system according to Claim 1 or one of the following claims,
**characterized**
**in that** each sensor (1, 2, 3, 4, 5, 6, 7, 8, 9, 10) has a microprocessor (20) and a module (22) for actuating and reading out a transducer (23) and a bus driver module (17).

5. Driver assistance system according to Claim 4,
**characterized**
**in that** each sensor (1, 2, 3, 4, 5, 6, 7, 8, 9, 10) has a data memory unit (21).

6. Driver assistance system according to Claim 4,
**characterized**
**in that** the sensors (1, 2, 3, 4, 5, 6, 7, 8, 9, 10) are each connected to a central data memory unit.

7. Driver assistance system according to Claim 6,
**characterized**
**in that** the central data memory unit is integrated into a data processing system of the motor vehicle, which data processing system carries out different functions from the driver assistance system.

8. Driver assistance system according to Claim 1 or one of the following claims,
**characterized**
**in that** the sensors (1, 2, 3, 4, 5, 6, 7, 8, 9, 10) have ultrasonic transducers (23).

9. Method for operating a driver assistance system with at least two sensors for emitting non-line-bound signals and for sensing reflected echo signals, wherein all the sensors (1, 2, 3, 4, 5, 6, 7, 8, 9, 10) are structurally identical and each sensor has a transducer (23) and an evaluation unit for determining a signal transit time, and the sensors are connected to one another and an output valuation unit (14) by means of a bus system, wherein each of the sensors (1, 2, 3, 4, 5, 6, 7, 8, 9, 10) carries out a transit time measurement, determines the transit time and passes on the sensing results to at least one other sensor, and wherein each of the sensors evaluates a transit time which is determined by it by comparison with the transit times which are transmitted by it, and the evaluation is transmitted to at least one further sensor together with the evaluations of the other sensors which are transmitted to it, wherein the corresponding overall result is transmitted to the output unit which is connected to the bus system and which ensures only that the sensing result can be perceived by a driver.

10. Method for operating a driver assistance system according to Claim 9,
having at least two sensors for emitting non-line-bound-signals and for sensing reflected echo signals, wherein all the sensors (1, 2, 3, 4, 5, 6, 7, 8, 9, 10) are structurally identical and each sensor has a transducer (23) and an evaluation unit for determining a signal transit time, and the sensors are connected to one another and to an output unit (14) by means of a bus system (12), wherein each of the sensors carries out a transit time measurement, determines the transit time and compares the transit time with an limiting value which is assigned to it, and wherein the sensor evaluates the comparison and transmits the evaluation together with the evaluations of the other sensors, transmitted to it to at least one further sensor, wherein the corresponding overall result is transmitted to the output unit which is connected to the bus system and which ensures only that the sensing result can be perceived by a driver.

11. Method for operating a driver assistance system with at least two sensors for emitting non-line-bound signals and for sensing echo signals which are, under certain circumstances, reflected, according to one of Claims 9 to 10,
**characterized in that** after a restart of the electrical system and/or after one of the sensors (1, 2, 3, 4, 5, 6, 7, 8, 9, 10) has been replaced or repaired the following initialization steps are carried out automatically:
firstly all the switches are opened,
each sensor checks whether it is connected to the bus line (12),
if a sensor is connected to the bus line, it evaluates the signal which has been, in certain circumstances, transmitted on the bus line and which contains the number of sensors which have already been registered,
the sensor is registered at the next highest registration number, closes the bus line to the adjacent sensor following it, and transmits the number of already registered sensors on the bus line.

## Revendications

1. Système d'assistance à la conduite destiné à acquérir l'environnement d'un véhicule automobile, comprenant au moins deux capteurs (1, 2, 3, 4, 5, 6, 7, 8, 9, 10) servant à émettre des signaux non filaires et à acquérir des signaux d'écho réfléchis, comprenant au moins une unité d'interprétation (20) destinée à déterminer un temps de propagation d'un signal et comprenant une unité de sortie/d'affichage (14) destinée à communiquer le résultat de l'acquisition de l'environnement au conducteur
**caractérisé en ce**
**que** tous les capteurs (1, 2, 3, 4, 5, 6, 7, 8, 9, 10) sont mutuellement de construction identique, en ce que chacun des capteurs possède une unité d'interprétation (20) destinée à déterminer un temps de propagation d'un signal et en ce que les capteurs sont reliés entre eux et avec l'unité de sortie/d'affichage (14) au moyen d'un système de bus (12), les résultats de l'acquisition par les capteurs déterminés individuellement de chaque capteur étant respectivement communiqués à au moins un capteur supplémentaire, chaque unité d'interprétation (20) possédant un module de conversion destiné à déterminer une distance d'un objet à partir du temps de propagation du signal, chaque unité d'interprétation (20) possédant un module de comparaison destiné à comparer la distance de l'objet déterminée dans le capteur (1, 2, 3, 4, 5, 6, 7, 8, 9, 10) correspondant ou le temps de propagation du signal avec les valeurs déterminées par d'autres capteurs et en ce que les capteurs accordent et comparent entre eux leurs résultats d'acquisition individuels correspondants et communiquent le résultat global correspondant à l'unité de sortie qui est raccordée au système de bus et qui ne contribue qu'à la visibilité du résultat de l'acquisition pour un conducteur.

2. Système d'assistance à la conduite selon la revendication 1 ou l'une des suivantes, **caractérisé en ce que** chaque unité d'interprétation (20) possède un module de comparaison de valeur limite destiné à comparer la distance de l'objet déterminée dans le capteur (1, 2, 3, 4, 5, 6, 7, 8, 9, 10) correspondant avec une valeur limite associée au capteur correspondant.

3. Système d'assistance à la conduite selon la revendication 1 ou 2, **caractérisé en ce que** depuis chaque capteur, l'intégration des valeurs acquises qu'il a déterminées parvient dans un télégramme de données.

4. Système d'assistance à la conduite selon la revendication 1 ou l'une des suivantes, **caractérisé en ce que** chaque capteur (1, 2, 3, 4, 5, 6, 7, 8, 9, 10) possède un microprocesseur (20), un composant (22) destiné à commander et à lire un convertisseur (23) et un composant pilote de bus (17).

5. Système d'assistance à la conduite selon la revendication 4, **caractérisé en ce que** chaque capteur (1, 2, 3, 4, 5, 6, 7, 8, 9, 10) possède une mémoire de données.

6. Système d'assistance à la conduite selon la revendication 4, **caractérisé en ce que** chaque capteur (1, 2, 3, 4, 5, 6, 7, 8, 9, 10) est respectivement relié à une unité de mémorisation de données centrale.

7. Système d'assistance à la conduite selon la revendication 6, **caractérisé en ce que** l'unité de mémorisation de données centrale est intégrée dans un système de traitement de données du véhicule automobile, lequel accomplit d'autres fonctions que le système d'assistance à la conduite.

8. Système d'assistance à la conduite selon la revendication 1 ou l'une des suivantes, **caractérisé en ce que** les capteurs (1, 2, 3, 4, 5, 6, 7, 8, 9, 10) possèdent des transducteurs d'ultrasons (23).

9. Procédé pour faire fonctionner un système d'assistance à la conduite comprenant au moins deux capteurs servant à émettre des signaux non filaires et à acquérir des signaux d'écho réfléchis, tous les capteurs (1, 2, 3, 4, 5, 6, 7, 8, 9, 10) étant de construction identique et chaque capteur possède un convertisseur (23) ainsi qu'une unité d'interprétation destinée à déterminer un temps de propagation d'un signal et les capteurs étant reliés entre eux et avec une unité de sortie (14) au moyen d'un système de bus, chacun des capteurs (1, 2, 3, 4, 5, 6, 7, 8, 9, 10) effectuant une mesure de temps de propagation, déterminant un temps de propagation et transmettant le résultat de l'acquisition à au moins un autre capteur, et chacun des capteurs évaluant un temps de propagation déterminé par lui par une comparaison avec les temps de propagation qui lui sont communiqués et communiquant l'évaluation, conjointement avec les évaluations des autres capteurs qui lui sont communiquées, à au moins un capteur supplémentaire, le résultat global correspondant étant communiqué à l'unité de sortie qui est raccordée au système de bus et qui ne contribue qu'à la visibilité du résultat de l'acquisition pour un conducteur.

10. Procédé pour faire fonctionner un système d'assistance à la conduite selon la revendication 9, comprenant au moins deux capteurs servant à émettre des signaux non filaires et à acquérir des signaux d'écho réfléchis, tous les capteurs (1, 2, 3, 4, 5, 6, 7, 8, 9, 10) étant de construction identique et chaque capteur possède un convertisseur (23) ainsi qu'une unité d'interprétation destinée à déterminer un temps de propagation d'un signal et les capteurs étant reliés entre eux et avec une unité de sortie (14) au moyen d'un système de bus (12), chacun des capteurs effectuant une mesure de temps de propagation, déterminant un temps de propagation et comparant celui-ci avec une valeur limite qui lui est associée et le capteur évaluant la comparaison et communiquant l'évaluation conjointement avec les évaluations des autres capteurs qui lui sont communiquées à au moins un capteur supplémentaire, le résultat global correspondant étant communiqué à l'unité de sortie qui est raccordée au système de bus et qui ne contribue qu'à la visibilité du résultat de l'acquisition pour un conducteur.

11. Procédé pour faire fonctionner un système d'assistance à la conduite, comprenant au moins deux capteurs servant à émettre des signaux non filaires et à acquérir des signaux d'écho éventuellement réfléchis selon l'une des revendications 9 à 10, **caractérisé en ce qu'**après un nouveau démarrage du système électrique et/ou après un remplacement ou une réparation de l'un des capteurs (1, 2, 3, 4, 5, 6, 7, 8, 9, 10), les étapes d'initialisation suivantes sont exécutées automatiquement :
tout d'abord, tous les commutateurs sont ouverts,
chaque capteur vérifie s'il est raccordé à la ligne de bus (12),
si un capteur est raccordé à la ligne de bus, il interprète alors un signal éventuellement envoyé sur la ligne de bus qui contient le nombre de capteurs déjà enregistrés,
le capteur s'enregistre sous le numéro d'enregistrement immédiatement supérieur, ferme la ligne de bus vers le capteur voisin qui le suit et communique sur la ligne de bus le nombre de capteurs déjà enregistrés.
